# EUROPEAN PATENT APPLICATION

(11) **EP 2 282 367 A1**
(43) Date of publication of application: **09.02.2011**
(21) Application number: 09738953.0
(22) Date of filing: 28.04.2009
(51) Int. Cl.: H01M 4/58

(54) **NEGATIVE ELECTRODE ACTIVE MATERIAL FOR LITHIUM SECONDARY BATTERY, PREPARATION METHOD OF THE SAME, AND LITHIUM SECONDARY BATTERY CONTAINING THE SAME**

(30) Priority: 29.04.2008 KR 20080039833
(71) Applicant: Ls Mtron Ltd., Dongan-gu Anyang-city Gyeonggi-do 431-080 (KR); SHOWA DENKO K.K., Tokyo 105-8518 (JP)
(72) Inventor: HAN, Jung-Min, Gimpo-si Gyeonggi-do 415-702 (KR); OH, Jeong-Hun, Anyang-si Gyeonggi-do 431-726 (KR); KIM, Jong-Sung, Seoul 152-050 (KR); YOUM, Chul, Suwon-si Gyeonggi-do 440-320 (KR); HAN, Kyung-Hee, Seongnam-si Gyeonggi-do 462-120 (KR); TAKEUCHI, Masataka, Kawasaki Kanagawa 210-0858 (JP); SUDOH, Akinori, Omachi, Nagano 398-0002 (JP); SOTOWA, Chiaki, Omachi, Nagano 398-0002 (JP)
(74) Representative: Strehl Schübel-Hopf & Partner
(86) International application number: PCT/KR2009/002205
(87) International publication number: WO 2009/134047

(57) **Abstract**

The present invention relates to a negative electrode active material for a lithium secondary battery, a preparation method thereof, and a lithium secondary battery containing the negative electrode active material. The negative electrode active material for the lithium secondary battery according to the present invention is formed by mixing: a carbon material coated with vapor growth carbon fiber (VGCF) and amorphous graphite; and one or more kinds of other carbon material selected from natural graphite, artificial graphite, amorphous-coated graphite, resin-coated graphite and amorphous carbon. According to the present invention, when the negative electrode active material is prepared, the carbon fiber is uniformly dispersed-throughout the carbon material, and the carbon material is coated with the amorphous graphite and then mixed with other carbon materials, and thus, a high electrode density can be achieved. Accordingly, even with high electrode density, the invention can provide the negative electrode active material with excellent electrochemical properties such as charge/discharge efficiency and cycle characteristics.

## Description

### [Technical Field]

The present invention relates to a negative electrode active material for a lithium secondary battery and a lithium secondary battery having the negative electrode active material as a negative electrode, and more particularly, to a negative electrode active material for a lithium secondary battery capable of improving electrochemical characteristics, a preparation method thereof, and a lithium secondary battery including the negative electrode active material as a negative electrode.

### [Background Art]

Recently, demand for a secondary battery which may be repeatedly charged and discharged to be used as a power source for portable electronic devices for information and communication, such as personal digital assistants (PDAs), mobile phones, notebook computers, and the like, or for electric bicycles, electric vehicles, and the like, has been rapidly increasing. In particular, the performance of products such as portable electronic devices or electric vehicles relies on the secondary battery, a core component, so the demand for a high performance battery is strong. The characteristics required for a secondary battery have various aspects: good charge and discharge characteristics, a long life span, a high rate capability, stability at high temperatures, and the like. A lithium secondary battery has therefore come into prominence because of its high voltage capacity and high energy density.

A lithium secondary battery includes a negative electrode and a positive electrode made of an active material allowing for the intercalation and deintercalation of lithium ions and produces electrical energy according to oxidation and reduction when lithium ions are intercalated into or deintercalated from the positive electrode and the negative electrode in a state in which an organic electrolyte or a polymer electrolyte is charged between the negative electrode and the positive electrode.

As a positive active material of the lithium secondary battery, a chalcogenide compound is used, and for example, a composite metal oxide such as LiCoO₂ LiMn₂O₄, LiNi₁₋ₓCOₓO₂ (0<x<1), or the like, is used.

As a negative electrode active material of the lithium secondary battery, a lithium metal is used; however, the use of the lithium metal may cause a battery short-circuit due to a dendrite formation, creating the risk of an explosion, so recently, the lithium metal has been replaced by a carbon-based material. A carbon-based active material used as a negative electrode active material of a lithium secondary battery includes crystalline carbon such as natural graphite or artificial graphite and low crystalline carbon such as soft carbon and hard carbon.

The amorphous (or low crystalline) carbon is advantageous in that it has a large capacity, but has a problem in that it is highly reversible.

As the crystalline carbon, natural graphite is typically used. However, although natural graphite has an excellent initial capacity and a relatively high theoretical limit capacity of 372 mA h/g, it has a problem in that it is severely degraded, and charge and discharge efficiency as well as cycle capacity is low. This problem has been known to result from an electrolyte decomposition occurring at an edge portion of high crystalline natural graphite.

Thus, in an effort to overcome this problem, there has been proposed a method of obtaining a negative electrode active material having improved charge and discharge efficiency and long-term cycle characteristics, even though initial capacity may be slightly reduced, by surface-treating (coating) low crystalline carbon on natural graphite and thermally treating it at 1000°C or higher to coat low crystalline carbide on the surface of natural graphite.

Also, in order to improve the efficiency and cycle capacity characteristics, a method of surface-treating natural graphite with amorphous graphite and mixing the same with other graphite has been proposed.

However, even in the case that natural graphite is surface-treated with low crystalline carbon or amorphous graphite in preparing the negative electrode active material, a high electrode density of 1.7 g/cc cannot be implemented, having a problem in that the high capacity and cycle capacity characteristics cannot be sufficiently satisfied.

Thus, efforts for solving the problem of the related art have been continued, and the present invention has been devised under such a technical background.

### [Disclosure]

### [Technical Problem]

An aspect of the present invention provides a negative electrode active material for a lithium secondary battery having excellent electrochemical characteristics even when used with a high electrode density, a preparation method thereof, and a lithium secondary battery including the negative electrode active material as a negative electrode.

Other purposes and advantages of the present invention can be seen from the Examples described below. The purposes and advantages of the present invention can also be achieved by the combination of the structures shown in the claims.

### [Technical Solution]

According to an aspect of the present invention, there is provided a negative electrode active material for a lithium secondary battery, formed by mixing a carbon material coated with vapor growth carbon fiber (VGCF) and amorphous graphite, and one or more kinds of other carbon materials selected from among natural graphite, artificial graphite, amorphous-coated graphite, resin-coated graphite, and amorphous carbon.

The carbon fiber may have a diameter ranging from 1 nm to 1000 nm, and the carbon fiber may be contained in 0.5 weight parts to 5 weight parts with respect to 100 weight parts of the carbon material.

The amorphous graphite may be contained in 0.5 weight parts to 10 weight parts with respect to 100 weight parts of the carbon material.

The carbon material coated with the VGC and amorphous graphite, and one or more kinds of other carbon materials selected from among natural graphite, artificial graphite, amorphous coated graphite, resin coated graphite, and amorphous carbon may be mixed in the ratio of 95:5 or 80:20.

According to another aspect of the present invention, there is provided a preparation method of a negative electrode active material for a lithium secondary battery, including: adding vapor growth carbon fiber (VGCF) and amorphous graphite to a carbon material and mixing them; and thermally treating the carbon material mixed with the VGCF and the amorphous graphite.

The method may further include: mixing one or more kinds of other carbon materials selected from among natural graphite, artificial graphite, amorphous coated graphite, and resin coated graphite with the carbon material which has been thermally treated after the VGCF and the amorphous graphite was mixed therein.

According to another aspect of the present invention, there is provided a lithium secondary battery having a negative electrode including the foregoing negative electrode active material.

### [Description of Drawings]

The above and other aspects, features and other advantages of the present invention will be more clearly understood from the following detailed description taken in conjunction with the accompanying drawings, in which:

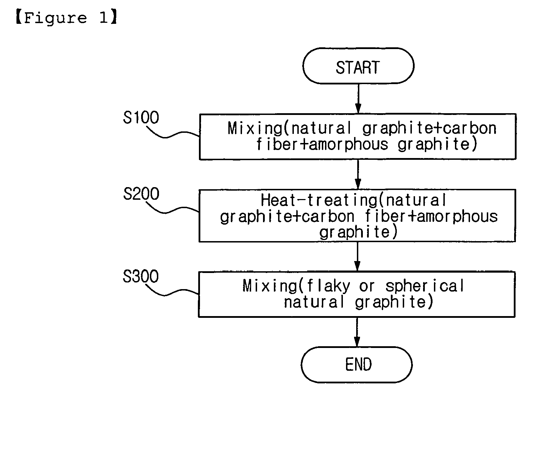

FIG. 1 is a flow chart illustrating the process of a method for preparing a negative electrode active material for a lithium secondary battery according to an exemplary embodiment of the present invention.

### [Best Mode]

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

The accompanying drawings of the present invention aim to facilitate understanding of the present invention and as such, the present invention should not be construed as being limited to the accompanying drawings. The technical idea of the present invention should be interpreted as embracing all such alterations, modifications, and variations in addition to the accompanying drawings.

A negative electrode active material according to an exemplary embodiment of the present invention is formed by mixing one or more kinds of carbon material selected from among natural graphite, artificial graphite, amorphous-coated graphite, resin-coated graphite and amorphous carbon to natural graphite prepared by coating carbon fiber and amorphous graphite thereon.

FIG. 1 is a flow chart illustrating the process of a method for preparing a negative electrode active material for a lithium secondary battery according to an exemplary embodiment of the present invention.

A method for preparing a negative electrode active material for a lithium secondary battery according to an exemplary embodiment of the present invention will now be described with reference to FIG. 1.

First, vapor growth carbon fiber (VGCF) and amorphous graphite are added to be mixed as a carbon material (step S100). Here, the carbon material may be natural graphite, artificial graphite, or a mixture thereof, and in this case, spherical natural graphite may be used.

Next, the mixture in which the VGCF and the amorphous graphite are uniformly mixed in the carbon material is thermally treated at a temperature range of 1000°C to 2500°C under an oxidation atmosphere, under a reduction atmosphere, or in a vacuum state (step S200). In the temperature range for the thermal treatment, if the temperature is lower than the low limit value, the amorphous graphite may not be carbonized and a specific surface area may undesirably not be reduced, while if the temperature is higher than the high limit value, the graphite may be undesirably sublimated.

Preferably, the VGCF has a diameter ranging from 1 nm to 1000 nm, and is contained in 0.5 weight parts to 5 weight parts with respect to 100 weight parts of the carbon material. In limiting the content of the carbon fiber, if the content of the carbon fiber is less than the low limit value, the effect of adding of the carbon fiber, such as an improvement of conductivity or the like, may be undesirably minimal, while if the content of the carbon fiber is more than the high limit value, the carbon fibers may undesirably conglomerate, rather than being uniformly distributed.

Preferably, the amorphous graphite is contained in 0.5 weight parts to 10 weight parts with respect to 100 weight parts of the carbon material. In limiting the content of the amorphous graphite, if the content of the amorphous graphite is less than the low limit value, an electrode decomposition in the vicinity of an edge of the natural graphite would be undesirably unrestrained, while if the content of the amorphous graphite is more than the high limit value, an excessive amount of amorphous graphite would be coated to undesirably degrade capacity.

Thus, when the VGCF is coated along with amorphous graphite on the carbon material, even when a high electrode density is used, a phenomenon in which a conductive path of the electrode and an electrolyte solution infiltration path are damaged can be prevented, and the conductivity of the electrode can be improved to improve the electrochemical characteristics such as the charge and discharge efficiency or the cycle characteristics.

And then, one or more kinds of carbon materials selected from natural graphite, artificial graphite, amorphous-coated graphite, resin-coated graphite and amorphous carbon may be mixed with the carbon material coated with the VGCF and the amorphous graphite (step S300).

Here, preferably, the one or more kinds of carbon materials selected from natural graphite, artificial graphite, amorphous-coated graphite, resin-coated graphite and amorphous carbon are mixed in the ratio of 95:5 or 80:20 by weight ratio. In limiting the mixture ratio of the one or more kinds of carbon materials selected from natural graphite, artificial graphite, amorphous-coated graphite, resin-coated graphite and amorphous carbon, if the mixture ratio is lower than the low limit value, the addition effect can be hardly obtained, which thus is not desirous, and if the mixture ratio is higher than the high limit value, the characteristics of the carbon material coated with the VGCF and the amorphous graphite could be damaged, which thus is not desirous.

In this manner, when the one or more kinds of carbon materials selected from natural graphite, artificial graphite, amorphous-coated graphite, resin-coated graphite and amorphous carbon are mixed with the carbon material coated with the VGCF and the amorphous graphite, the conductivity of the negative electrode active material can be further improved. In addition, in manufacturing the electrode, carbon particles can be prevented from being broken due to compression, so even when a high electrode density is used, the electrochemical characteristics such as the charge and discharge efficiency and the cycle characteristics of the lithium secondary battery can be improved.

The present invention also provides a lithium secondary battery including the negative electrode active material for a lithium secondary battery, which is formed by mixing a carbon material coated with VGCF and amorphous graphite, and one or more kinds of other carbon materials selected from among natural graphite, artificial graphite, amorphous-coated graphite, resin-coated graphite, and amorphous carbon, as a negative electrode. The lithium secondary battery including a positive electrode, a negative electrode, and a separator interposed between the both electrodes is characterized by having the negative electrode active material for a lithium secondary battery prepared by the preparation method as described above as a negative electrode.

The method for manufacturing the secondary battery is a general method widely known in the art, and the secondary battery can be manufactured by positioning a porous separator between the positive electrode and the negative electrode and injecting electrolyte thereinto.

As described above, in preparing the negative electrode active material, the surface of the carbon material is coated with the carbon fiber (i.e., VGCF) having a diameter ranging from 1 nm to 1000 nm and amorphous graphite, which is then mixed with other carbon materials, whereby the electrode can be pressed with a high electrode density, compared with the related art carbon material coated only with amorphous graphite, and the charge and discharge efficiency and cycle characteristics of the lithium secondary battery can be improved.

To help understand the present invention, Embodiments 1 to 6 and Comparative Examples 1 to 3 will be described in detail as follows. However, the embodiments of the present invention can be modified in various forms and the scope of the present invention should not be construed as being limited to the embodiments described hereinafter. The embodiments of the present invention are provided to fully explain the present invention to those having an average knowledge in the art.

### [Mode for Invention]

Embodiment 1

5 wt% of pitch and 2 wt% of VGCF were mixed with spherical natural graphite in a dry manner at a high speed for about ten minutes to prepare a mixture, and the mixture was then primarily and secondarily fired (or baked) for one hour at 1100°C and 2200°C, respectively. Thereafter, classification was performed to remove fine particles to prepare a carbon material on which the pitch and the VGCF were uniformly coated.

Uncoated spherical natural graphite was evenly mixed with the prepared carbon material by using 50% rotary mixing equipment. 100g of the negative electrode active material prepared thusly was put into a 500 ml reactor, and an aqueous carboxymethyl cellulose (CMC) solution and aqueous styrene-butadiene rubber (SBR) dispersions were introduced to the reactor, which were then mixed by using a mixer and coated to have a thickness of about 100 µm on copper foil. Thereafter, the resultant material was dried and shaped through roll compression. The density per volume of the manufactured electrode was adjusted to be 1.7 g/cm³. In order to evaluate the manufactured electrode, a coin cell was manufactured and its charging and discharging efficiency and cycle characteristics were assessed.

Embodiment 2

A negative electrode active material was prepared in the same manner as that of Embodiment 1, except that 50% of spherical natural graphite which is entirely or partially coated was mixed as amorphous graphite.

Embodiment 3

A negative electrode active material was prepared in the same manner as that of Embodiment 1, except that 20% of uncoated planar natural graphite was mixed.

Embodiment 4

A negative electrode active material was prepared in the same manner as that of Embodiment 1, except that 30% of spherical natural graphite was mixed.

Embodiment 5

A negative electrode active material was prepared in the same manner as that of Embodiment 1, except that 30% of platy (plate-like shaped) artificial graphite was mixed.

Embodiment 6

A negative electrode active material was prepared in the same manner as that of Embodiment 1, except that 510% of pitch and 2% of VGCF were used.

Comparative Example 1

5 wt% of pitch and 2 wt% of VGCF were mixed with spherical natural graphite in a dry manner at a high speed for about ten minutes to prepare a mixture, and the mixture was then primarily and secondarily fired (or baked) for one hour at 1100°C and 2200°C, respectively. Thereafter, classification was performed to remove fine particles to prepare a negative electrode active material for a lithium secondary battery coated with amorphous graphite.

100g of the negative electrode active material prepared thusly was put into a 500 ml reactor, and an aqueous carboxymethyl cellulose (CMC) solution and aqueous styrene-butadiene rubber (SBR) dispersions were introduced into the reactor, which were then mixed by using a mixer and coated with a thickness of about 100 µm on copper foil. Thereafter, the resultant material was dried and shaped through roll compression. The density per volume of the manufactured electrode was adjusted to be 1.7 g/cm³. In order to evaluate the manufactured electrode, a coin cell was manufactured and its charging and discharging efficiency and cycle characteristics were assessed.

Comparative Example 2

A negative electrode active material was prepared in the same manner as that of Comparative Example 1, except that only 5% of pitch was mixed with spherical natural graphite and coated.

Comparative Example 3

A negative electrode active material was prepared in the same manner as that of Comparative Example 2, except that 50% of uncoated spherical natural graphite was mixed.

Comparative Example 4

A negative electrode active material was prepared in the same manner as that of Comparative Example 2, except that 20% of uncoated planar natural graphite was mixed.

Charge and discharge characteristics were evaluated by using the coin cells manufactured according to Embodiments 1 to 6 and Comparative Examples 1 to 4 and the results are shown in Table 1 below.

Evaluation of battery characteristics

Charging and discharging tests were performed on the coin cells manufactured according to Embodiments 1 to 6 and Comparative Examples 1 to 4. In the charge and discharge testing, the potential was regulated to range from 0 V to 1.5 V. Charging was performed with a charge current of 0.5 mA/cm² until it reached 0.01V, and also, charging was maintained at 0.01V until the charge current reached 0.02 mA/cm². In discharge testing, current was discharged at 0.5 mA/cm² until it reached 1.5V.

Table 1 below shows the experimental results, and the charging and discharging efficiency in Table 1 shows the ratio of discharged electric capacity to charged electric capacity.

**[Table 1]**

| | 1 ^{st} cycle discharge capacity (mAh/g) | 1^{st} Cycle efficiency (%) | 30 Cycle retention (%) |
|---|---|---|---|
| Embodiment 1 | 356.7 | 94.0 | 93.3 |
| Embodiment 2 | 355.3 | 94.2 | 94.5 |
| Embodiment 3 | 357.1 | 93.8 | 93.9 |
| Embodiment 4 | 356.4 | 93.9 | 94.1 |
| Embodiment 5 | 354.8 | 94.1 | 92.8 |
| Embodiment 6 | 355.9 | 93.8 | 93.3 |
| Comparative Example 1 | 350.4 | 92.1 | 80.5 |
| Comparative Example 2 | 347.5 | 91.0 | 75.1 |
| Comparative Example 3 | 348.2 | 90.5 | 73.7 |
| Comparative Example 4 | 347.1 | 90.8 | 74.1 |

As noted from Table 1, the coin cells using the negative electrode active materials according to Embodiments 1 to 6 exhibit excellent charge and discharge efficiency and cycle characteristics, even when a higher electrode density is used, compared with the coin cells using the related art negative electrode active materials according to Comparative Examples 1 to 4.

In this manner, it can be noted that, in preparing the negative electrode active materials according to Embodiments 1 to 6, when the carbon fiber is uniformly distributed or dispersed in the carbon material coated along with amorphous graphite, which is then mixed with other carbon materials, then, the electrochemical characteristics such as the charge and discharge efficiency or the cycle characteristics of the lithium secondary battery can be improved even when a high electrode density is used.

As set forth above, according to exemplary embodiments of the invention, in preparing the negative electrode active material, the carbon fiber is uniformly distributed or dispersed in the carbon material coated along with amorphous graphite, which is then mixed with other carbon materials, thereby implementing a further improved high electrode density. Thus, the negative electrode material having excellent electrochemical characteristics such as the charge and discharge efficiency or the cycle characteristics of the lithium secondary battery can be provided even when a high electrode density is used.

### [Industrial Applicability]

While the present invention has been shown and described in connection with the exemplary embodiments, it will be apparent to those skilled in the art that modifications and variations can be made without departing from the spirit and scope of the invention as defined by the appended claims.

## Claims

1. A negative electrode active material for a lithium secondary battery, formed by mixing a carbon material coated with vapor growth carbon fiber (VGCF) and amorphous graphite, and one or more kinds of other carbon materials selected from among natural graphite, artificial graphite, amorphous-coated graphite, resin-coated graphite, and amorphous carbon.

2. The negative electrode active material of claim 1, wherein the carbon fiber has a diameter ranging from 1 nm to 1000 nm.

3. The negative electrode active material of claim 2, wherein the carbon fiber is contained in 0.5 weight parts to 5 weight parts with respect to 100 weight parts of the carbon material.

4. The negative electrode active material of claim 1, wherein the amorphous graphite is contained in 0.5 weight parts to 10 weight parts with respect to 100 weight parts of the carbon material.

5. The negative electrode active material of claim 1, wherein the carbon material coated with the VGCF and amorphous graphite, and one or more kinds of other carbon materials selected from among natural graphite, artificial graphite, amorphous-coated graphite, resin-coated graphite, and amorphous carbon are mixed in the ratio of 95:5 or 80:20.

6. A preparation method of a negative electrode active material for a lithium secondary battery, the method comprising:
adding vapor growth carbon fiber (VGCF) and amorphous graphite to a carbon material and mixing them; and
thermally treating the carbon material mixed with the VGCF and the amorphous graphite.

7. The method of claim 6, further comprising:
mixing one or more kinds of other carbon materials selected from among natural graphite, artificial graphite, amorphous coated graphite, and resin coated graphite amorphous carbon with the carbon material which has been thermally treated after the VGCF and the amorphous graphite was mixed therein.

8. A lithium secondary battery having a negative electrode including the negative electrode active material according to any one of claim 1 to claim 7.
